# EUROPEAN PATENT APPLICATION

(11) **EP 4 768 365 A1**
(43) Date of publication of application: **01.07.2026**
(21) Application number: 25223264.0
(22) Date of filing: 15.12.2025
(51) Int. Cl.: B62D 25/04, B62D 25/02, B62D 25/08, B62D 25/20, B62D 29/00

(54) **BODY STRUCTURE FOR VEHICLE AND VEHCILE WITH A BODY STRUCTURE**

(30) Priority: 26.12.2024 JP 2024230308
(71) Applicant: MAZDA MOTOR CORPORATION, Hiroshima 730-8670 (JP)
(72) Inventor: Kimura, Takayuki, Aki-gun, Hiroshima, 730-8670 (JP); Shimanaka, Tsuneki, Aki-gun, Hiroshima, 730-8670 (JP)
(74) Representative: Lorenz Seidler Gossel Part. mbB

(57) **Abstract**

[Problem] To efficiently transmit a frontal collision load, which is directed from a front frame to the rear of a vehicle, to a side sill and a tunnel side frame that are offset from the front frame in a vehicle front view during a frontal collision of the vehicle.

[Solution] Side sills 4 arranged along both left and right sides of a floor panel 1 are each arranged at a position that overlaps a lower end portion of a respective outer hinge pillar 72 in an inward displaced shape, in which a lower portion is displaced inward in a vehicle width direction, in the vehicle width direction. A rear portion 32 of each of front frames 3 provided on both left and right sides in a front space PR of a dash panel 2 is formed as a rear enlargement portion gradually enlarged toward a rear end portion and is formed as a part of a cast body 100, a rear end portion of which is joined to the dash panel 2. The rear end portion of the cast body 100 is configured to overlap a front end portion of each of the side sills 4 and a front end portion 122 of a tunnel side frame 12 provided in a tunnel portion 10 of the floor panel 1 in a vehicle front view.

## Description

### [Technical Field]

The present invention relates to a body structure for a vehicle including: a dash panel that separates a cabin and a front space of the cabin in a vehicle front-rear direction; a pair of left and right front frames that extends in the vehicle front-rear direction on both left and right sides of the front space; and body frames, such as side sills and tunnel side frames, that extend in the vehicle front-rear direction at a height of a body floor surface behind the dash panel.
The present invention also relates to a vehicle.

### [Background Art]

Conventionally, as exemplified in Patent Literature 1, a body is formed with an underload path as a load transmission path for transmitting and dispersing a frontal collision load from a front frame to the rear of a vehicle along a body frame, which is provided at a height of a body floor surface, during a frontal collision of a vehicle (hereinafter, referred to as the "frontal collision").

The underload path in Patent Literature 1 transmits the frontal collision load from the front frame to a side sill, a floor frame, and a tunnel side frame as body frames provided at the height of the body floor surface.

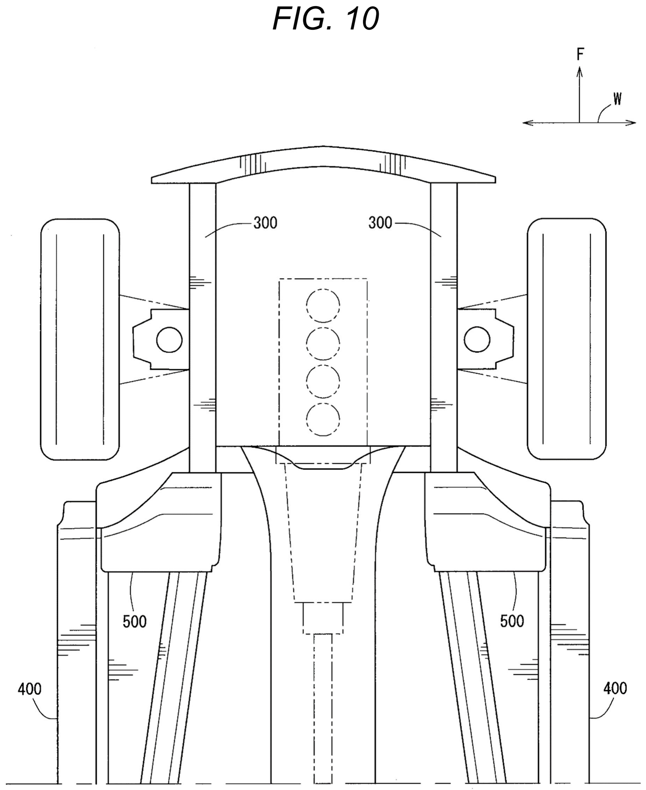

That is, for example, as illustrated in FIG. 10, of the above-described body frames, since each of side sills 400 is offset from a respective front frame 300 in a vehicle width direction, a front end portion of each of the side sills 400 and a rear end portion of the respective front frame 300 are appropriately coupled by a load transmission member such as a torque box 500 that extends in the vehicle width direction. In this way, the conventional body structure as disclosed in Patent Literature 1 is configured to absorb energy by transmitting and dispersing the frontal collision load from the front frame 300 to the body frame, such as the side sill 400, that extends in a vehicle front-rear direction at the height of the body floor surface via the load transmission member.

However, in the conventional body structure as illustrated in FIG. 10, in order to improve transmission efficiency of the frontal collision load from the front frame to the side sill 400, which is offset from the front frame 300 in the vehicle width direction, there is a problem that the load transmission member such as the torque box 500 is enlarged.

### [Citation List]

### [Patent Literature]

[Patent Literature 1] JP2005-75167A

### [Summary of Invention]

### [Technical Problem]

The invention has been made in view of such a problem, and an object thereof is to provide a body structure for a vehicle capable of efficiently transmitting a frontal collision load, which is directed from a front frame to the rear of a vehicle, to a side sill and a tunnel side frame that are offset, that is, displaced from the front frame in a vehicle front view during a frontal collision of the vehicle.

### [Solution to Problem]

The problem is solved by means of a body structure for a vehicle according to claim 1 and by a vehicle according to claim 15.
Preferred embodiments are the subject-matter of the subclaims.

The invention is a body structure for a vehicle including: a dash panel that separates a cabin and a front space of the cabin in a vehicle front-rear direction; a pair of left and right front frames that extends in the vehicle front-rear direction on both left and right sides of the front space, respectively; a pair of left and right hinge pillars that extends in an up-down direction in both end portions of the dash panel in a vehicle width direction, respectively; a pair of left and right side sills, to which lower ends of the hinge pillars are respectively fixed, and which extends in the vehicle front-rear direction; and a floor panel that extends rearward in a vehicle from a lower end portion of the dash panel to form a floor surface of the cabin, a tunnel portion that bulges upward being formed in a central portion of the floor panel in the vehicle width direction, a pair of left and right tunnel side frames that extends in the vehicle front-rear direction being disposed in side wall lower end portions on both sides of the tunnel portion in the vehicle width direction, and each of the hinge pillars including an outer hinge pillar in which a hinge attachment portion for attaching a door hinge is provided on each of upper and lower sides, in which the outer hinge pillar is formed in an inward displaced shape in which a portion thereof below a lower hinge attachment portion as lower one of the hinge attachment portions is displaced inward in the vehicle width direction, each of the side sills is arranged at such a position that at least a part thereof overlaps a lower end portion of the outer hinge pillar in the vehicle width direction, a rear portion of each of the front frames is formed as a rear enlargement portion that is gradually enlarged toward a rear end portion, at least the rear portion of each of the front frames is formed by a cast body, a rear end portion of which is joined to the dash panel, and the rear end portion of the cast bodyis configured to overlas a front end portion of each of the side sills and a front end portion of each of the tunnel side frames in a vehicle front view.

According to the invention, each of the side sills is arranged on the inner side of the hinge attachment portion, which is formed in the respective outer hinge pillar, in the vehicle width direction, and the rear end portion of the cast body including the rear portion of each of the front frames that is widened toward the rear end overlaps the front end portion of each of the side sills and the front end portion of each of the tunnel side frames. Thus, a frontal collision load during a frontal collision of the vehicle is made to transfer as linearly as possible from the front frame to the rear of the vehicle, and it is thereby possible to improve efficiency of load transmission.

Furthermore, a floor frame that extends along a floor panel in a front-rear direction at a position directly below a driver is eliminated, and the tunnel side frames are provided. In this way, it is possible to lower a floor, and as a result, it is possible to lower a hip point of the driver.

In the invention, as long as the rear end portion of the cast body is configured to overlap the front end portion of each of the side sills and the front end portion of each of the tunnel side frames in the vehicle front view, it may be configured that a portion on the outer side of the front frame rear portion as the rear enlargement portion in the vehicle width direction overlaps the front end portion of each of the side sills in the vehicle front view, or it may be configured that a portion on the inner side of the front frame rear portion in the vehicle width direction overlaps the front end portion of each of the tunnel side frames in the vehicle front view.

Alternatively, in the invention, it may be configured that the front frame rear portion, which is the rear enlargement portion provided in the cast body, itself overlaps at least one of the front end portion of each of the side sills and the front end portion of each of the tunnel side frames in the vehicle front view.

As an aspect of the invention, each of the side sills may have a closed cross-sectional space that extends in the vehicle front-rear direction between an inner side sill and an outer side sill, the front end portion of each of the side sills may include a closing member that closes a front opening of the closed cross-sectional space, and an outer portion of the rear end portion of the cast body may be joined to the inner side sill via the closing member.

According to the invention, it is possible to efficiently transmit and disperse the frontal collision load from the outer portion of the cast body to the inner side sill via the closing member during a frontal collision.

Furthermore, the closing member is provided over the inner side sill and the outer side sill in the vehicle front view in a manner to close the front opening of the closed cross-sectional space in the front end portion of each of the side sills. Thus, it is also possible to transmit and disperse the frontal collision load to the outer side sill via the closing member.

As an aspect of the invention, an apron frame and an apron support portion may be provided on an outer side of each of the front frames in the vehicle width direction, the apron support portion extending downward from a rear end portion of the apron frame to a height of the respective side sill, and the apron support portion may be formed as the outer portion of the rear end portion of the cast body.

According to the invention, the apron support portion can also be used as a part of the load transmission from each of the front frames to the respective side sill.

As an aspect of the invention, the rear portion of each of the front frames and the respective apron support portion may be coupled in a width direction via a coupling margin portion that constitutes a part of the cast body, and may be integrally formed in the vehicle width direction.

According to the invention, also in the configuration that the side sill is offset to the vehicle width outer side from the rear portion of the front frame, the rear end portion of the cast body is widened to the outer side in the vehicle width direction from the rear portion of the front frame and can thereby overlap the side sill by the coupling margin portion and the apron support portion in the vehicle front view. Thus, it is possible to improve transmission efficiency of the frontal collision load from the front frame to the side sill.

As an aspect of the invention, each of the side sills may be provided below the respective front frame, and the outer portion of the rear end portion of the cast body may be provided with a rib that continuously extends from a position above the height of each of the side sills to the height of the respective side sill.

According to the invention, it is possible to improve the transmission efficiency of the frontal collision load from the front frame to the side sill, which is located below the front frame.

As an aspect of the invention, the rear portion of each of the front frames may be configured to be enlarged downward to a height of the respective side sill, which is provided below the respective front frame, toward the rear end portion.

According to the invention, it is possible to improve the transmission efficiency of the frontal collision load in the up-down direction from the front frame to the side sill, which is located below the front frame.

According to the invention, in the rear portion of each of the front frames, an inner end in the vehicle width direction may overlap the front end portion of the respective tunnel side frame in the vehicle front view.

According to the invention, since the rear portion of the front frame itself overlaps the front end portion of the tunnel side frame in the vehicle front view, it is possible to improve the transmission efficiency of the frontal collision load from the front frame to the front end portion of the tunnel side frame.

### [Advantageous Effects of Invention]

The invention can provide the body structure for a vehicle capable of efficiently transmitting the frontal collision load, which is directed from the front frame to the rear of the vehicle, to the side sill and the tunnel side frame that are offset, that is, displaced from the front frame in the vehicle front view during a frontal collision of the vehicle.

### [Brief Description of Drawings]

[FIG. 1] FIG. 1 is a perspective view in which a main section of a vehicle having a body structure in the present embodiment is seen from a body front side and a right side.
[FIG. 2] FIG. 2 is a side view in which the main section of the vehicle having the body structure in the present embodiment is seen from the right side.
[FIG. 3] FIG. 3 is a bottom view of the main section of the vehicle having the body structure in the present embodiment.
[FIG. 4] FIG. 4 is a cross-sectional view of a body central portion and a right side that is taken along line A-A in FIG. 2.
[FIG. 5] FIG. 5 is an enlarged perspective view in which the main section of the vehicle having the body structure in the present embodiment is seen from the body front side and the right side.
[FIG. 6] FIG. 6 is a cross-sectional view of the body right side that is taken along line B-B in FIG. 2.
[FIG. 7] FIG. 7 is a cross-sectional view of the body right side that is taken along line C-C in FIG. 2.
[FIG. 8] FIG. 8 is a cross-sectional view of the body right side that is taken along line D-D in FIG. 2.
[FIG. 9] FIG. 9 is a cross-sectional view of the main section of the vehicle that is taken along line E-E in FIG. 2.
[FIG. 10] FIG. 10 is a bottom view illustrating a conventional body structure.

### [Description of Embodiments]

A description will hereinafter be made on, as an embodiment of the invention, an embodiment in which a body structure for a vehicle in the invention is applied to a front-engine, rear-wheel-drive (FR) sports car with reference to the drawings. In the drawings, an arrow F indicates a vehicle front direction, an arrow U indicates a vehicle up direction, an arrow W indicates a vehicle width direction, OUT indicates an outer side in the vehicle width direction (also referred to as a "vehicle width outer side"), and IN indicates an inner side in the vehicle width direction (also referred to as a "vehicle width inner side").

Since the body structure in the present embodiment is a substantially bilaterally-symmetrical structure, a description will be centered on a configuration on a vehicle right side. In the following description, each of front, rear, right, left, up, and down directions indicates a respective direction with a body being a reference unless otherwise specified, and "rein" stands for "reinforcement".

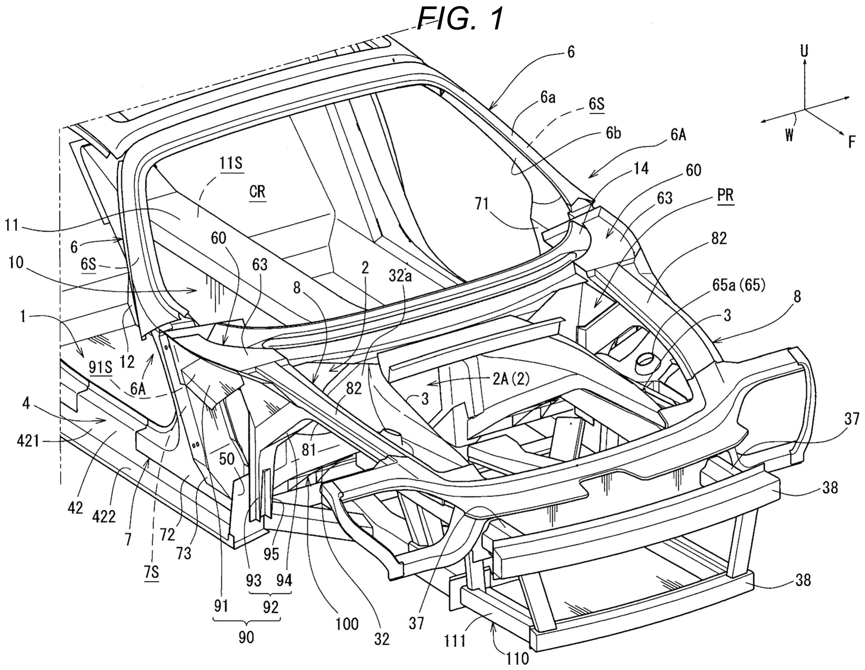

As illustrated in FIGs. 1 to 3, the body structure in the present embodiment mainly includes a floor panel 1 provided with a tunnel portion 10, a dash panel 2, a front frame (also referred to as a front side frame) 3, a side sill 4, a torque box 5, a front pillar 6, a hinge pillar 7, an apron frame 8, a dash rein 9, a tunnel upper frame 11, and a tunnel side frame 12.

Of these elements, the front frames 3, the side sills 4, the torque boxes 5, the front pillars 6, the hinge pillars 7, the apron frames 8, the dash reins 9, and the tunnel side frames 12 are each provided as a left and right pair in the body structure.

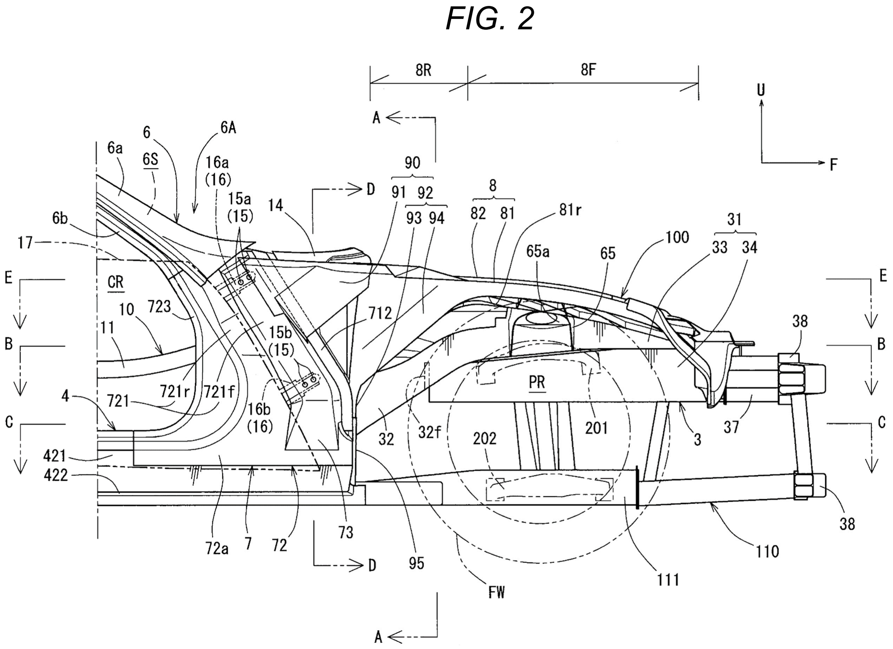

As illustrated in FIGs. 1 and 2, the vehicle in the present embodiment includes subframes (also referred to as "suspension cross members") 110, each of which supports a suspension for suspending a front wheel FW, on both left and right sides under a power unit room PR. The subframe 110 is only illustrated in FIGs. 1 and 2.

In FIG. 2, an upper arm support frame 34 supports a vehicle width inner end of an upper arm 201 provided in the suspension in a manner to be swingable in the up-down direction, and a lower arm support frame 111 supports a vehicle width inner end of a lower arm 202 provided in the suspension in a manner to be swingable in the up-down direction. For example, the subframe 110 is formed in a shape of parallel crosses by combining a plurality of frame members having a closed cross section along an extending direction of such upper arm support frame 34 and lower arm support frame 111, and the like.

### (Floor Panel 1)

As illustrated in FIG. 1, in a body lower portion, the floor panel 1 extends in the vehicle width direction and the front-rear direction to constitute a cabin CR floor surface. The tunnel portion 10 that bulges upward and extends in the front-rear direction within the cabin CR is formed in a central portion of the floor panel 1 in the left-right direction.

### (Tunnel Upper Frame 11 and Tunnel Side Frame 12)

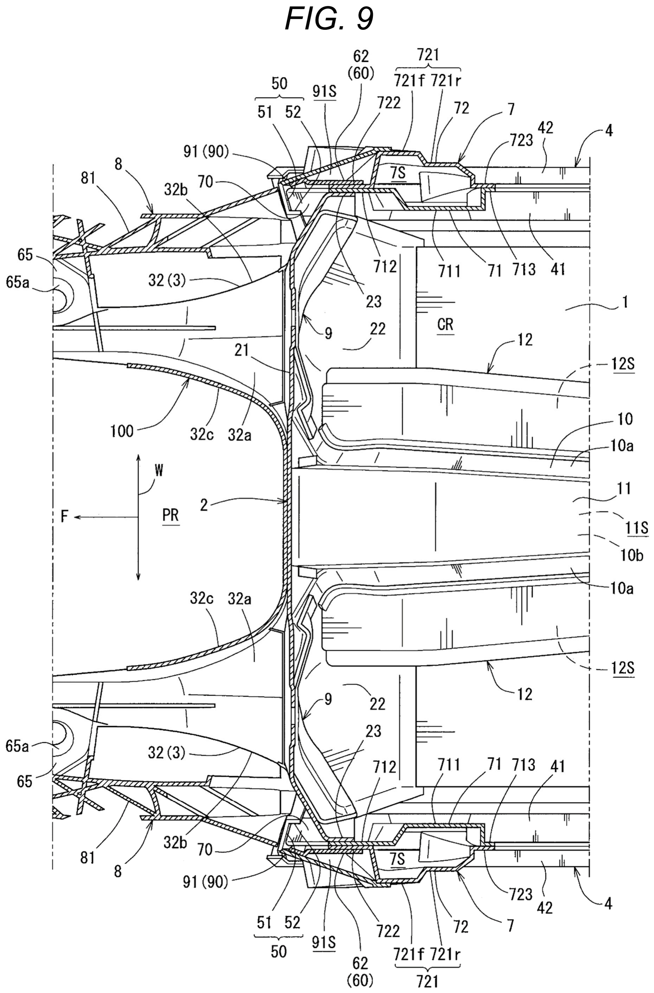

As illustrated in FIG. 9, the tunnel portion 10 at a center of the floor panel 1 in the vehicle width direction is formed such that a cross section orthogonal to the front-rear direction bulges upward in a gate shape by a pair of left and right side surface portions 10a and an upper surface portion 10b that connects upper ends of these side surface portions 10a in the vehicle width direction.

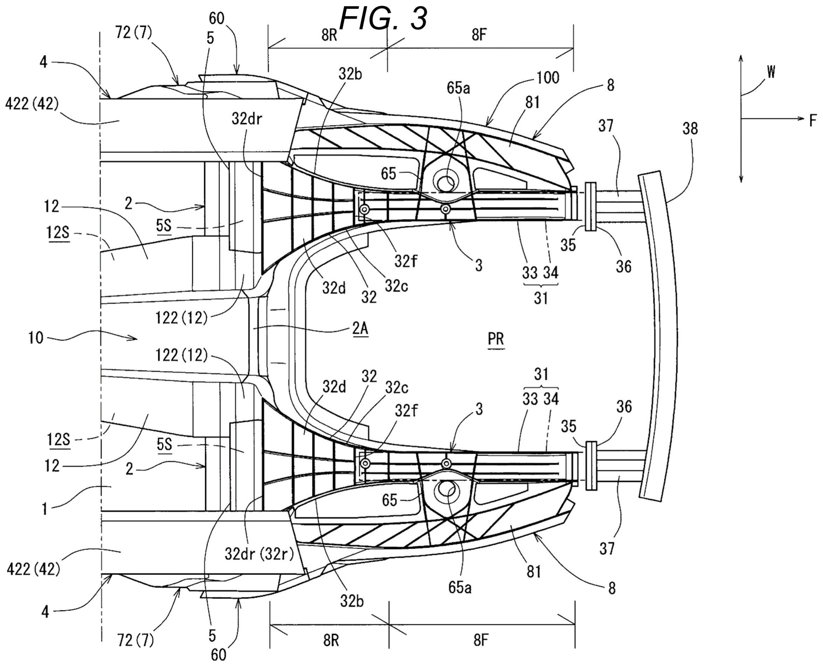

As illustrated in FIGs. 1, 2, and 9, the tunnel upper frame 11 as a backbone frame that extends in the front-rear direction is joined to an upper portion of the tunnel portion 10. In a cross section orthogonal to the front-rear direction, the tunnel upper frame 11 is substantially formed in a U-shape that is opened downward and has corners in both end portions in the vehicle width direction, has lower end portions on both of the left and right sides that are respectively joined to upper portions of the left and right side surface portions 10a, and thereby forms a closed cross section 11S, which extends over an entire length in the front-rear direction including a front end of the tunnel portion 10, with the upper surface portion 10b of the tunnel portion 10. As illustrated in FIGs. 3 and 9, the tunnel side frames 12, each of which has a closed cross section 12S extending in the front-rear direction, are provided in lower end portions on both of the left and right sides of the tunnel portion 10.

### (Dash Panel 2)

As illustrated in FIG. 9, the dash panel 2 is a vertical wall-shaped plate member that is disposed along the vehicle width direction and the vehicle up-down direction in a manner to separate the cabin CR and the power unit room PR as a front space thereof in the front-rear direction. More specifically, as illustrated in FIG. 9, the dash panel 2 includes: a body portion 21 that extends along the vehicle up-down direction; a kick-up portion 22 that extends downward in the vehicle to the rear of the vehicle from a lower end portion of the body portion 21; and left and right vehicle width outer edge flange portions 23. These body portion 21, kick-up portion 22, and vehicle width outer edge flange portions 23 are integrally formed by pressing a single flat sheet, respectively.

A rear end of the kick-up portion 22 of the dash panel 2 is coupled to a front end of the floor panel 1 by welding or the like.

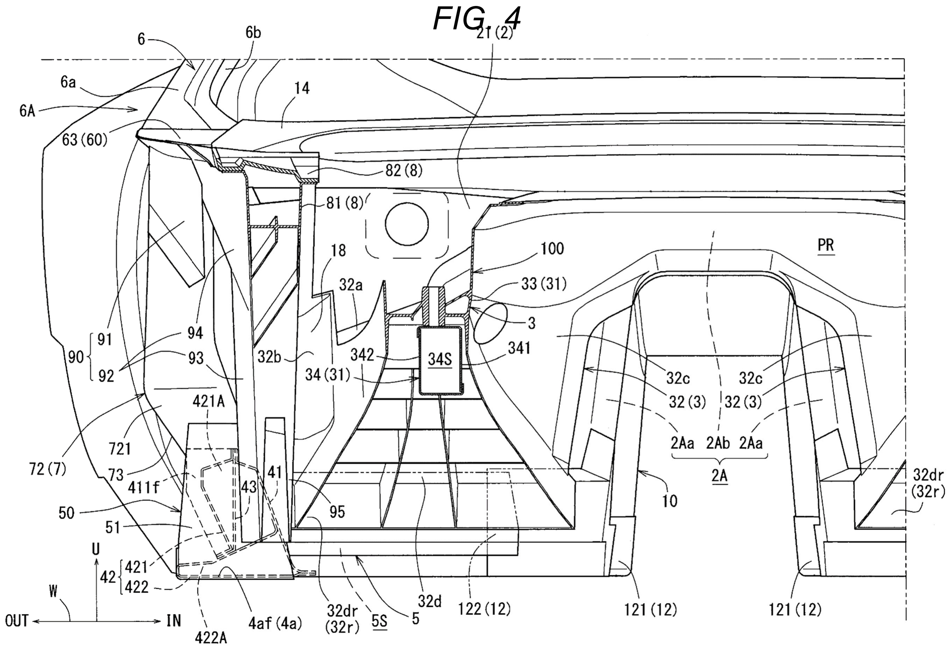

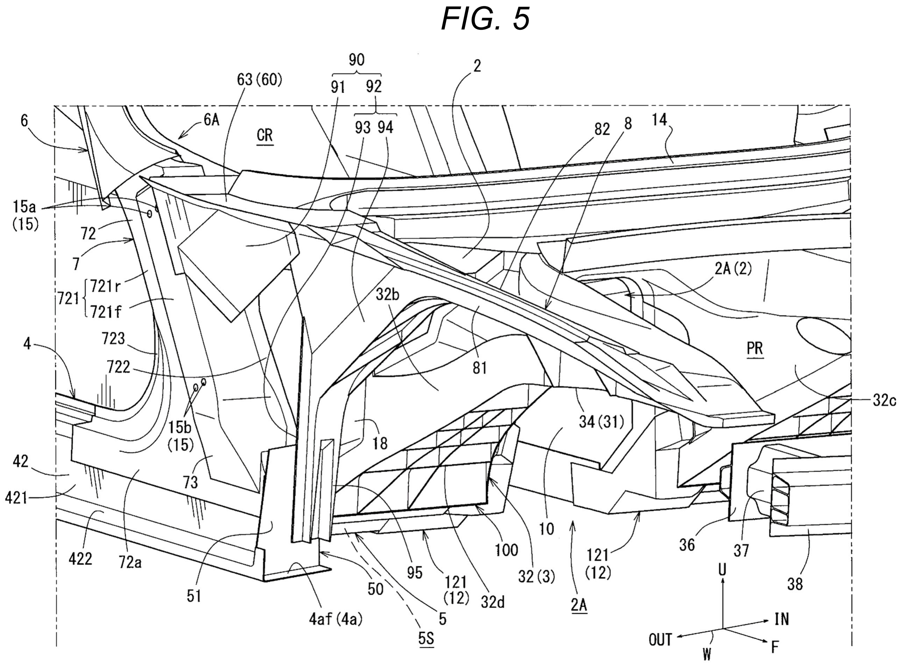

Furthermore, as illustrated in FIGs. 4 and 5, a tunnel opening 2A that bulges upward is formed in a central portion in the vehicle width direction of a lower portion of the dash panel 2. This tunnel opening 2A is joined to the front end of the tunnel portion 10 that is formed in the central portion of the floor panel 1 in the vehicle width direction (see FIG. 3). A space below the tunnel portion 10 and the power unit room PR communicate with each other in the front-rear direction via the tunnel opening 2A.

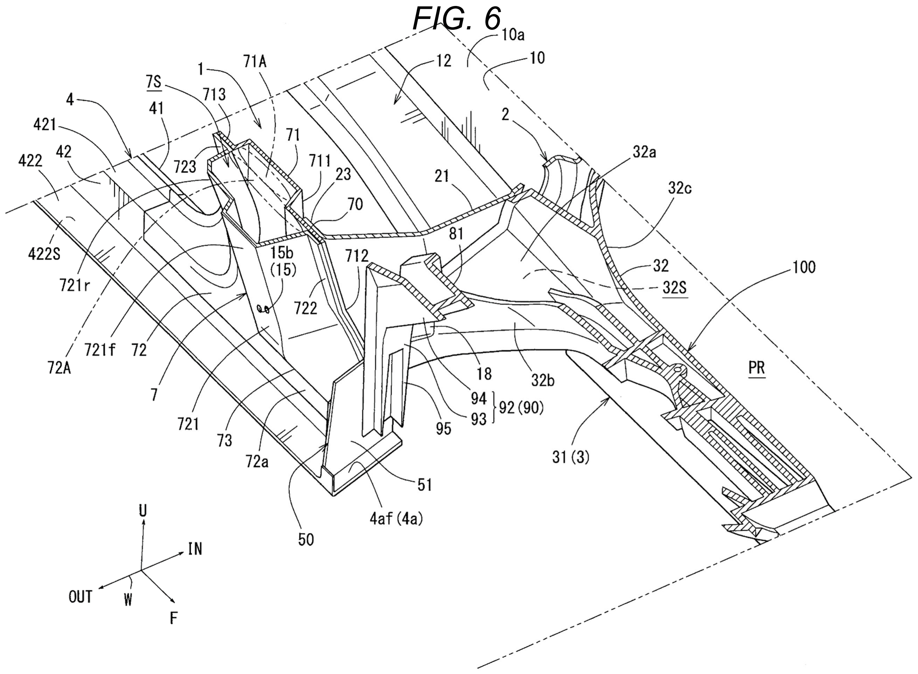

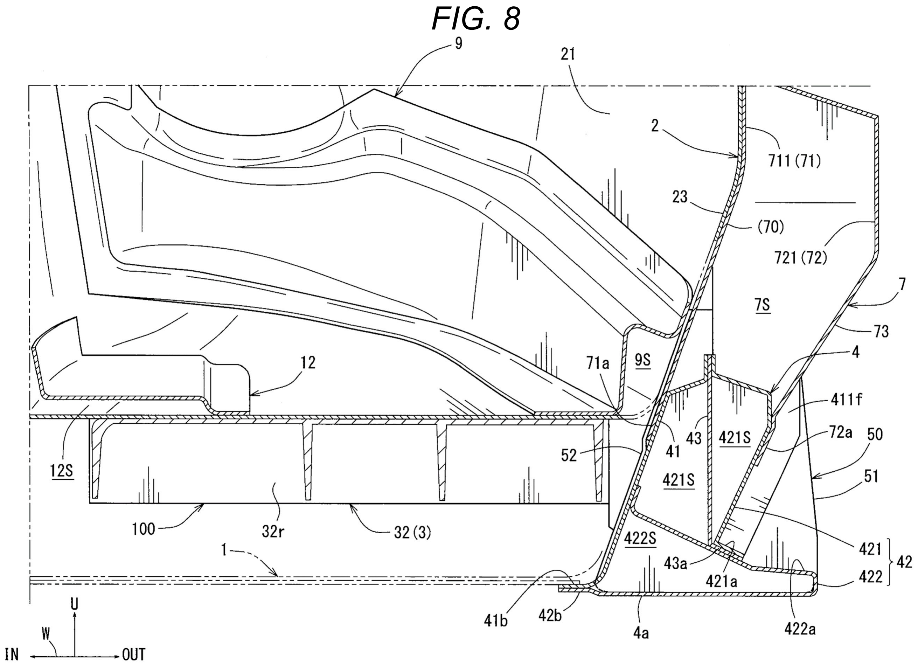

As illustrated in FIGs. 6 to 9, each of the left and right vehicle width outer edge flange portions 23 of the dash panel 2 extends rearward from an outer edge portion in the vehicle width direction of the dash panel 2, is formed over a substantially entire length in the up-down direction of an outer edge portion in the vehicle width direction, and, as illustrated in FIG. 8, is joined to a side inner panel 70 and an inner side sill 41, which will be described below.

An upper end portion of the body portion 21 of the dash panel 2 extends forward (not illustrated), and a trough-shaped cowl panel 14 as illustrated in FIG. 1 is installed on an upper surface portion thereof. The cowl panel 14 has rigidity for supporting a lower portion of a front windshield (not illustrated), which is inclined in a front-down direction, via a filler from below over substantially entirety thereof in the vehicle width direction, and extends in the vehicle width direction over a substantially entire length of the dash panel 2.

### (Front Frame 3)

As illustrated in FIGs. 1 to 4, 6, and 9, the front frames 3 are body rigid members, each of which extends in the front-rear direction from a front surface of the dash panel 2, on both left and right sides of the power unit room PR in front of the dash panel 2.

Each of the front frames 3 includes: a front frame rear portion 32 that extends forward in the vehicle from the front surface of the dash panel 2; and a front frame front portion 31 that extends further forward from a front position of the front frame rear portion 32.

The front frame rear portion 32 is provided as a rear enlargement portion that is gradually enlarged both leftward and rightward as well as downward to a rear end portion 32r from the front frame front portion 31, and the rear end portion 32r is joined to the front surface of the dash panel 2.

Meanwhile, as illustrated in FIGs. 2 and 3, a lower portion of a front end portion of the front frame rear portion 32 is located on a center axis of the front frame 3, and is formed with a vertical wall-shaped rib 32f against which a rear end portion of the front frame front portion 31 can abut from the front.

The front frame front portion 31 includes a front extending portion 33 and a front frame front body portion 34 that are arranged in parallel to each other on upper and lower sides along the front-rear direction.

The front frame front body portion 34 extends linearly on the center axis along the front-rear direction of the front frame 3, and, as illustrated in FIG. 4, a closed cross section 34S, in which a frame inner panel 341 on the inner side in the vehicle width direction and a frame outer panel 342 on the outer side in the vehicle width direction are joined to each other and a cross-sectional shape orthogonal to the front-rear direction is U-shaped (so-called monaka shape), is configured to be along the front-rear direction. The front frame front body portion 34 is coupled to the front frame rear portion 32 in a state where a rear end portion thereof abuts the vertical wall-shaped rib 32f (see FIGs. 2 and 3) in the lower portion of the front end portion (a front end lower portion) of the front frame rear portion 32 from the front. In this way, as illustrated in FIG. 2, the front frame front body portion 34 extends forward from the front end lower portion of the front frame rear portion 32 to a front end portion of the front frame 3. That is, the front frame rear portion 32 and the front frame front body portion 34 are disposed in series along the center axis of the front frame 3.

Here, the front frame front body portion 34 serves not only as a part of the front frame 3 but also as the upper arm support frame (34) provided in the subframe 110 as illustrated in FIG. 2.

The front extending portion 33 extends forward from an upper portion of the front end portion (a front end upper portion) of the front frame rear portion 32 to the front end portion of the front frame 3, is arranged on top of the front frame front body portion 34, and is configured to support the front frame front body portion 34 from directly above and support a vehicle inner side of a suspension housing 65.

### (Front Frame Rear Portion 32)

As illustrated in FIG. 4, the front frame rear portion 32 includes: an upper wall portion 32a; a rear enlarged outer portion 32b that is widened to the vehicle width outer side toward the rear from the front frame front portion 31; a rear enlarged inner portion 32c that is widened to the vehicle width inner side toward the rear from the front frame front portion 31; and a rear enlarged lower portion 32d that is widened downward to the rear from the front frame front portion 31.

### (Rear End Portion 32r of Front Frame Rear Portion 32)

The rear enlarged outer portion 32b couples outer end portions in the vehicle width direction of the upper wall portion 32a and the rear enlarged lower portion 32d in the up-down direction, and the rear enlarged inner portion 32c couples inner end portions in the vehicle width direction of the upper wall portion 32a and the rear enlarged lower portion 32d in the up-down direction.

As a result, as illustrated in FIG. 4 and FIG. 6, the front frame rear portion 32 is formed as a trumpet-shaped, box-shaped hollow body, whose entire periphery is surrounded by the upper wall portion 32a, the rear enlarged outer portion 32b, the rear enlarged inner portion 32c, and the rear enlarged lower portion 32d in a cross-sectional view orthogonal to the front-rear direction, whose inner space 32S (see FIG. 6) is opened rearward, and both sides in the vehicle width direction and the lower side of which are gradually enlarged rearward.

As illustrated in FIGs. 3 and 4, the rear end portion 32r of the front frame rear portion 32 is joined to the front surface of the dash panel 2, and a rear end lower side portion 32dr as a rear end of the rear enlarged lower portion 32d is joined to the front surface of the dash panel 2 via the torque box 5 and a front end portion 122 of the tunnel side frame 12, which will be described below.

### (Torque Box 5)

As illustrated in FIGs. 3 and 4, the torque boxes 5 are a pair of left and right body strength members, each of which is joined to a lower front surface of the body portion 21 of the dash panel 2 and forms a closed cross section 5S extending in the vehicle width direction with the lower front surface, and, on each of the left and right sides, respectively connect the front end portion 122 of the tunnel side frame 12 and a front end portion of the side sill 4 in the vehicle width direction.

When the rear end lower side portion 32dr of the front frame rear portion 32 is described in detail, the rear end lower side portion 32dr extends along the vehicle width direction at a height of the torque box 5 that is joined to the lower front surface of the body portion 21 of the dash panel 2, and a portion thereof other than an inner end in the vehicle width direction is joined in a manner to abut a front surface portion of the torque box 5 from the front.

Meanwhile, a vehicle width inner end portion of the rear end lower side portion 32dr of the rear end portion 32r of the front frame rear portion 32 overlaps the front end portion 122 of the tunnel side frame 12 in a front view, that is, in the present example, the rear end lower side portion 32dr of the front frame rear portion 32 is joined in a manner to abut the front end portion 122 of the tunnel side frame 12 from the front.

As illustrated in FIG. 3, the tunnel side frame 12 described above has the closed cross section 12S over an entire length thereof in the front-rear direction, including the front end portion 122. A closed cross section of the front end portion 122 and a closed cross section of a portion 121 behind the front end portion 122 are continuous with each other in the front-rear direction via the dash panel 2.

As a result, it is configured that, during a frontal collision, the torque box 5 and the front end portion 122 of the tunnel side frame 12 receive the rear end lower side portion 32dr of the front frame rear portion 32 while a frontal collision load from the front frame 3 is transmitted and dispersed to the tunnel side frame 12 and the side sill 4.

The front frame rear portion 32 and the front extending portion 33 of the front frame front portion 31 described above are integrally formed with each other as a part of a cast body 100. Accordingly, the front frame 3 is configured that the front frame front body portion 34, which is made of a steel sheet, in the front frame front portion 31 and the front frame rear portion 32 and the front extending portion 33, which are made of the cast body 100, cooperate with each other. The above-described cast body 100 will be described below.

As illustrated in FIG. 3, a crash can 37 as a shock absorbing member is attached to a front end portion of the front frame front body portion 34 in the front frame 3 via a set plate 35 and a bracket 36, and a bumper beam 38 that has a closed cross section extending in the vehicle width direction is coupled between front end portions of a pair of the left and right crash cans 37.

### (Side Sill 4)

As illustrated in FIGs. 1 to 3 and 5, the side sill 4 is provided to extend in the body front-rear direction along an end portion of the floor panel 1 in the body width direction, and is disposed on the outer side in the body width direction and the lower side of the front frame 3. As illustrated in FIG. 8, the side sill 4 mainly includes an inner side sill 41, an outer side sill 42, and a side sill rein 43. On the outer side of the inner side sill 41 in the vehicle width direction, the outer side sill 42 includes an upper outer side sill 421 provided in an upper portion of the side sill 4 and a lower outer side sill 422 provided in a lower portion thereof.

Each of these elements 41, 421, 422, 43 of the side sill 4 is formed by pressing a metal panel member.

The inner side sill 41 extends over an entire length of the side sill 4 in the up-down direction in a manner to be inclined outward in the vehicle width direction as it goes upward. Each of the upper outer side sill 421 and the lower outer side sill 422 is formed to have a hat-shaped cross section that is opened inward in the body width direction.

In the lower portion of the side sill 4, an inner end portion of the lower outer side sill 422 in the vehicle width direction is joined to a lower portion of the inner side sill 41. The lower outer side sill 422 is configured to have a tilted installation posture that extends from the inner side sill 41 to the outer side of a vehicle width outer surface portion of the upper outer side sill 421 in the vehicle width direction (that is, a horizontally long shape in the vehicle front view).

As a result, the lower outer side sill 422 and the inner side sill 41 form a lower side sill closed cross section 422S, which extends over an entire area of the lower portion of the side sill 4 in the vehicle width direction, therebetween.

The upper outer side sill 421 and the side sill rein 43 are vertically provided from an upper surface portion 422a of the lower outer side sill 422 as a base at a position near the inner side in the vehicle width direction in the lower portion of the side sill 4. Together with the side sill rein 43, a lower end portion 421a of the upper outer side sill 421 is joined to the upper surface portion 422a of the lower outer side sill 422 in a state of interposing the side sill rein 43 between the upper outer side sill 421 and the inner side sill 41 in the vehicle width direction, and an upper end portion thereof is joined to an upper end portion of the inner side sill 41 (see FIG. 8). As a result, between the upper outer side sill 421 and the inner side sill 41, an upper side sill closed cross section 421S is formed at a position near the inner side in the vehicle width direction in the upper portion of the side sill 4.

On the upper and lower sides of the side sill 4, the upper side sill closed cross section 421S and the lower side sill closed cross section 422S as the side sill closed cross sections 421S, 422S are formed over the entire length in the front-rear direction to the substantially front end portion of the side sill 4, and are opened to the front of the vehicle in front end portions of the inner side sill 41, the outer side sill 42, and the side sill rein 43.

An inner edge flange portion 41b, which extends inward in the vehicle width direction, in a lower end portion of the inner side sill 41 and an inner edge flange portion 42b, which extends inward in the vehicle width direction from an inner end portion in the vehicle width direction, in a lower surface portion of the lower outer side sill 422 are superimposed in the up-down direction together with a vehicle width outer end portion of the floor panel 1, and the three are joined by welding or the like.

As illustrated in FIG. 2, a front portion of the side sill 4 extends farther forward than a front pillar base portion 6A, which will be described below, and at a front end thereof, both of the upper side sill closed cross section 421S and the lower side sill closed cross section 422S are opened to the front. A lid member 50 as a closing member is attached to both of an upper opening 421A, which is opened to the front at a front end of the upper side sill closed cross section 421S, and a lower opening 422A, which is opened to the front at a front end of the lower side sill closed cross section 422S. As a result, the upper opening 421A and the lower opening 422A are closed.

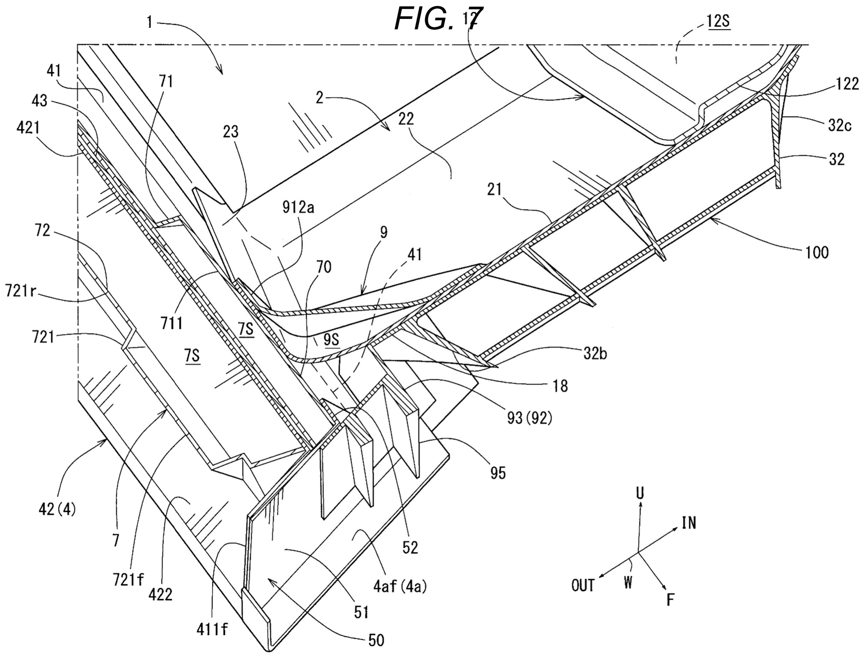

More specifically, as illustrated in FIGs. 7 and 8, the lid member 50 is integrally formed by a flat plate-shaped lid body portion 51 that has a plate thickness in the front-rear direction and an inner edge flange portion 52 that extends rearward from a vehicle width inner end of the lid body portion 51. Each of the lid body portion 51 and the inner edge flange portion 52 is formed to have a height from a lower end of the side sill 4 to a position higher than an upper end of the side sill 4.

At a front end of the side sill 4, the lid body portion 51 is arranged in a vertical wall shape to be able to close the upper opening 421A and the lower opening 422A, and, more specifically, as illustrated in FIGs. 6 and 7, entirety thereof is arranged to be inclined rearward to the inner side in the vehicle width direction in a manner to correspond to a shape of the front end portion of each of the inner side sill 41, the outer side sill 42, and the side sill rein 43.

Here, as illustrated in FIGs. 5 to 7, a lower wall portion 4a of the side sill 4 is integrally formed with a lid support piece 4af that extends forward from the front end of the lower side sill closed cross section 422S. Furthermore, as illustrated in FIG. 8, a front end of the upper outer side sill 421 is integrally formed with a front end flange portion 411f that extends in a brim shape in an opposite direction to the upper side sill closed cross section 421S in the vehicle width direction.

In the lid member 50, a lower end portion of the lid body portion 51 is supported by the lid support piece 4af of the lower outer side sill 422, and a rear surface of the lid body portion 51 is joined to the front end flange portion 411f of the upper outer side sill 421. As illustrated in FIGs. 7 and 8, in the lid member 50, in an upper portion that corresponds to a height of a lower end portion of a hinge pillar 7, which will be described below, the inner edge flange portion 52 is joined to a lower portion of an inner hinge pillar 71, that is, a side inner panel 70 from the inner side in the vehicle width direction, and in a lower portion that corresponds to a height of the side sill 4, the inner edge flange portion 52 is joined to the inner side sill 41 from the inner side in the vehicle width direction.

Thus, the lid member 50 is integrally fixed to the front end portion of the side sill 4 and the lower end portion of the hinge pillar 7.

### (Front Pillar 6)

As illustrated in FIGs. 1 and 2, the front pillar 6 extends along the front-down direction by joining an outer front pillar 6a and an inner front pillar 6b at a side edge that corresponds to each of left and right side edges of an opening for disposing the front windshield (not illustrated), which is inclined in the front-down direction. The front pillar 6 is a body strength member that has a front pillar closed cross section 6S and supports the front windshield from each of the left and right sides via a filler.

### (Hinge Pillar 7)

As illustrated in FIGs. 1, 2, and 5 to 7, on each of the left and right sides of the dash panel 2, the hinge pillar 7 extends in the up-down direction between the front lower end portion (hereinafter referred to as the "front pillar base portion") 6A, which serves as a base portion of the front pillar 6, and the side sill 4. As illustrated in FIG. 6, the hinge pillar 7 is a body strength member that has a hinge pillar closed cross section 7S extending along the up-down direction by joining the inner hinge pillar 71 and an outer hinge pillar 72.

More specifically, as illustrated in FIG. 6, the inner hinge pillar 71 includes an inner body portion 711, a front flange portion 712 that extends forward from an outer end in the vehicle width direction of a front surface of the inner body portion 711, and a rear flange portion 713 that extends rearward from an outer end in the vehicle width direction of a rear surface of the inner body portion 711, and is formed to have a substantially hat-shaped cross section, which is orthogonal to the up-down direction, as a whole. The inner body portion 711 serves as a front surface, a vehicle width inner surface, and a rear surface of the inner hinge pillar 71, and has an outer opening 71A that is opened to the outer hinge pillar 72.

The outer hinge pillar 72 includes an outer body portion 721, a front flange portion 722 that extends forward from an outer end in the vehicle width direction of a front surface of the outer body portion 721, and a rear flange portion 723 that extends rearward from an outer end in the vehicle width direction of a rear surface of the outer body portion 721, and is formed to have a substantially hat-shaped cross section, which is orthogonal to the up-down direction, as a whole. The outer body portion 721 serves as a front surface, a vehicle width outer surface, and a rear surface of the outer hinge pillar 72, and has an inner opening 72A that is opened to the inner hinge pillar 71.

As illustrated in FIGs. 2, 5, and 6, the outer body portion 721 is formed to bulge over a substantially entire length in the up-down direction such that a side surface front portion 721f is raised one step higher to the outer side in the vehicle width direction than a side surface rear portion 721r. A hinge attachment portion 15 (15a, 15b) for attaching a door hinge 16 (16a, 16b), which pivotally supports a front end of a swing door (17) in an openable/closable manner, is provided on each of upper and lower sides of the side surface front portion 721f of the outer body portion 721 (see FIG. 2).

As illustrated in FIG. 6, the inner hinge pillar 71 and the outer hinge pillar 72 have the hinge pillar closed cross section 7S, which continues in the up-down direction, therebetween by joining the front flange portions 712, 722 and joining the rear flange portions 713, 723.

As illustrated in FIG. 2, the outer hinge pillar 72 of the hinge pillar 7 is arranged such that at least a front portion (the side surface front portion 721f of the outer body portion 721 and the front flange portion 721) in the front-rear direction is displaced downward to the front from an upper end portion joined to the front pillar base portion 6A and is inclined downward to the front in a vehicle side view, and a lower end portion (72a) is joined to the front end portion of the side sill 4.

Meanwhile, as illustrated in FIGs. 6 and 7, the inner hinge pillar 71 includes the side inner panel 70 that extends forward from an end portion on the outer side in the body width direction of the front surface of the inner body portion 711.

The side inner panel 70 is integrally formed in a vertical wall shape with the inner body portion 711 in a manner to form a side surface portion of a body front portion in front of the inner body portion 711, and the vehicle width outer edge flange portion 23 of the dash panel 2 is joined thereto from the inner side in the vehicle width direction. The front flange portion 712 of the inner hinge pillar 71 is provided in a front end portion of the side inner panel 70.

The side inner panel 70 may be formed by a single member as a part of the inner hinge pillar 71, or may be formed by a different member as a separate member from the inner hinge pillar 71 and joined thereto.

As illustrated in FIG. 6, in the outer hinge pillar 72, the outer body portion 721 having the inner opening 72A opposes not only the inner body portion 711 of the inner hinge pillar 71 but also a portion behind the front flange portion 712 of the side inner panel 70 via the hinge pillar closed cross section 7S in the vehicle width direction.

That is, in the hinge pillar 7, as described above, in association with the arrangement of at least the front portion of the outer hinge pillar 72 that is inclined downward to the front in the vehicle side view, the hinge pillar closed cross section 7S is arranged farther forward (that is, expands farther forward) than a front end of the inner body portion 711 (the outer opening 71A) over the entire length in the up-down direction, and the lower end portion (72a) thereof is joined to the front end portion of the side sill 4 (see FIGs. 2 and 6).

The hinge attachment portion 15 (15a, 15b) is provided on each of the upper and lower sides of a vehicle width outer surface of the side surface front portion 721f of the outer body portion 721 of the outer hinge pillar 72.

As described above, as illustrated in FIG. 2, in correspondence with the arrangement of the front portion of the outer hinge pillar 72 that is inclined downward to the front in the vehicle side view, the upper and lower hinge attachment portions 15a, 15b are attached in such a posture that the lower hinge attachment portion 15b is located in front of the upper hinge attachment portion 15a and that the door hinges 16 (16a, 16b) attached to the upper and lower hinge attachment portions 15a, 15b are each inclined downward to the rear.

Then, the outer hinge pillar 72, which is arranged to be inclined downward to the front, pivotally supports the swing door 17 as a flip-up side door (17), in which a door rear portion is displaced outward and upward like a scissor door or a butterfly door when the door is opened, via the upper and lower door hinges 16 (see FIG. 2).

As illustrated in FIGs. 2 and 4 to 6, the side surface front portion 721f of the outer body portion 721 of the outer hinge pillar 72 is formed with an inward deformed portion 73 in which a vehicle width outer surface is displaced such that a portion of the outer hinge pillar 72 below the lower hinge attachment portion 15b of the upper and lower hinge attachment portions 15a, 15b is inclined inward in the vehicle width direction. A flange portion 72a, which is formed in a lower end portion of the outer hinge pillar 72 including a lower end portion of an inward deformed portion 73, is joined to a shoulder portion of the outer side sill 42 (an upper portion of the outer side sill 42) .

As a result, as illustrated in FIG. 8, the side sill 4 is arranged at a position at which at least a part thereof overlaps the flange portion 72a, which is formed in the lower end portion of the outer hinge pillar 72 including the lower end portion of the inward deformed portion 73, in the vehicle width direction.

More specifically, in the side sill 4, an outer end of the upper outer side sill 421 in the vehicle width direction is arranged on the inner side in the vehicle width direction of a vehicle width outer surface portion, which is formed with the upper and lower hinge attachment portions 15, in the outer hinge pillar 72 (see FIG. 8). In the present example, the side sill 4 including an outer end of the lower outer side sill 422 in the vehicle width direction is arranged on the inner side in the vehicle width direction of the vehicle width outer surface portion, which is formed with the upper and lower hinge attachment portions 15, in the outer hinge pillar 72 (see FIG. 8).

As illustrated in FIG. 8, a flange portion 71a, which is provided in a lower end portion of the inner hinge pillar 71, is joined to a shoulder portion of the inner side sill 41 (an upper portion of the inner side sill 41).

### (Cowl Side Rein 60)

Meanwhile, as illustrated in FIGs. 1, 4, 5, and 9, a cowl side rein 60 that extends forward from the upper portion of the hinge pillar 7 is provided on the vehicle width inner side and near the front side of the upper portion of the hinge pillar 7. The cowl side rein 60 is formed to have a substantially closed cross-sectional shape that extends in the front-rear direction by an inner panel (not illustrated) serving as a vehicle width inner wall and a bottom wall, an outer panel 62 (see FIG. 9) serving as a vehicle width outer wall, and an upper panel 63 (see FIGs. 4 and 5) serving as an upper wall.

The outer panel 62 of the cowl side rein 60 is joined to the side inner panel 70, which extends forward from the inner body portion 711 of the inner hinge pillar 71, from the vehicle width inner side. That is, in the vicinity of the upper portion of the hinge pillar 7, the cowl side rein 60 is indirectly supported by the hinge pillar 7.

Both left and right end portions of the trough-shaped cowl panel 14 (see FIG. 1), which is provided in an upper end portion of the dash panel 2, are joined to the inner panels of the cowl side reins 60, and the cowl panel 14 is thereby supported from both the left and right end portions.

### (Apron Frame 8)

As illustrated in FIGs. 1 to 5 and 9, the apron frames 8 extend in the front-rear direction at positions on the outer side in the vehicle width direction of and above the pair of the left and right front frames 3, which is described above and extends in the front-rear direction, and support vehicle outer sides of the suspension housings 65.

A rear end portion of the apron frame 8 is joined to a front end portion of the cowl side rein 60 that is adjacent to the upper portion of the hinge pillar 7 from the inner side in the vehicle width direction. Thus, the apron frame 8 extends forward from the cowl side rein 60 near the front pillar base portion 6A, and is joined to the upper portion of the hinge pillar 7 via the cowl side rein 60 from the inner side in the vehicle width direction.

More specifically, as illustrated in FIGs. 4 and 5, the apron frame 8 includes an apron frame body portion 81 and an upper surface plate member 82 provided above the apron frame body portion 81. In other words, as illustrated in FIGs. 2 and 3, the apron frame 8 is divided into an apron rear region 8R that extends forward from the cowl side rein 60 and an apron front region 8F that extends further forward from a front end of the apron rear region 8R.

Each of the apron frame body portion 81 and the upper surface plate member 82 is continuously provided over an entire length of the apron frame 8 including the apron rear region 8R and the apron front region 8F. A rear end portion of the upper surface plate member 82 is joined to a front end portion of the upper panel 63 of the cowl side rein 60, and a rear end portion of the apron frame body portion 81 is joined to front end portions of the inner panel and the outer panel 62 of the cowl side rein 60. As will be described below, the apron frame body portion 81 is formed as a part of the cast body 100. Meanwhile, the upper surface plate member 82 is formed of a metal plate material, such as a steel plate, in a substantially flat plate shape that serves as an upper surface of the apron frame 8, has a plate thickness in the up-down direction, and is long in the front-rear direction.

### (Suspension Housing 65)

As illustrated in FIGs. 1 and 2, the suspension housing 65 is suspended in the vehicle width direction between the front frame 3 and the apron frame 8 in a manner to be supported in cooperation thereof. The suspension housing 65 is spaced forward from the hinge pillar 7 and the dash panel 2, and a front suspension is accommodated below.

A suspension top portion 65a, to which a damper (not illustrated) provided in the front suspension is attached from below, is provided in a top portion of the suspension housing 65.

### (Bracing Rein 90)

As illustrated in FIGs. 1, 2, 4, and 5, between a front portion of the hinge pillar 7 and a lower portion of the apron frame 8, a first bracing rein 91 and a second bracing rein 92 are provided as a bracing rein 90 that couples these in a bracing manner in the vehicle side view.

Each of the first bracing rein 91 and the second bracing rein 92 extends in a manner to be inclined downward to the rear from the lower portion of the apron frame 8 to the front portion of the hinge pillar 7.

The first bracing rein 91 couples an upper front portion of the outer pillar panel and the lower portion of the apron frame 8 in a bracing manner in the vicinity of the cowl side rein 60, and forms a first bracing closed cross section 91S with the outer panel 62 of the cowl side rein 60 (see FIGs. 1 and 9).

As illustrated in FIGs. 2 and 5, on the inner side in the vehicle width direction and in front of the first bracing rein 91, that is, directly below the apron frame 8, the second bracing rein 92 joins a lower portion of the apron front region 8F of the apron frame 8 and a lower end portion of the hinge pillar 7 (the hinge pillar closed cross section 7S).

More specifically, the second bracing rein 92 is integrally formed by an apron support portion 93, which hangs vertically downward from the rear end portion of the apron frame 8, and a bracing body portion 94, which couples the apron support portion 93 and the lower portion of the apron front region 8F in a bracing manner.

The apron support portion 93 hangs down until a lower end portion thereof reaches the height of the side sill 4, is joined to a front surface of the lid member 50, which has a vertical wall shape and is provided at a front end of the side sill 4, and is joined to the side sill 4 and the hinge pillar 7 via the lid member 50.

More specifically, as illustrated in FIG. 4, a lower portion of the apron support portion 93 is coupled to the upper and lower side sill closed cross sections 421S, 422S of the side sill 4 via the lid body portion 51 of the lid member 50, and, as illustrated in FIG. 7, is joined to the hinge pillar closed cross section 7S via the inner edge flange portion 52 of the lid member 50. The lower portion of the apron support portion 93 is arranged at a position close to the inner side in the vehicle width direction such that an outer portion thereof in the vehicle width direction mainly overlaps the inner side sill 41 of the elements 41, 42, 43 constituting the side sill 4 in the vehicle front view (see FIG. 4).

### (Rib 95)

Furthermore, as illustrated in FIGs. 4 to 7, in the apron support portion 93 that extends in the up-down direction, a portion below a joint portion, which is located at a rear end of the bracing body portion 94, is provided with a pair of left and right ribs 95, each of which continues in the up-down direction to a lower end of the apron support portion 93.

This rib 95 extends in the up-down direction from a position above the lid member 50 in a manner to overlap the lid member 50 in the vehicle front view, and increases strength of a portion of the apron support portion 93 below the bracing body portion 94. More specifically, when the frontal collision load from the front frame 3 is transmitted to the side of the side sill 4 and the hinge pillar 7, which are provided below and the vehicle width outer side of the front frame 3, via the second bracing rein 92, the frontal collision load is transmitted along the rib 95, and load transmission efficiency is thereby improved.

At a position between the apron support portion 93 and the apron frame 8, the bracing body portion 94 couples these in a bracing manner. More specifically, a rear end portion of the bracing body portion 94 is coupled to an upper portion extending from an upper end of the apron support portion 93 along the up-down direction to an intermediate portion thereof in the up-down direction. Meanwhile, an upper end portion of the bracing body portion 94 is coupled to a lower portion of the apron rear region 8R over an entire length in the front-rear direction, and a front end portion of the bracing body portion 94 is coupled to a rear end portion of the apron front region 8F that is located in front of a rear portion of the suspension housing 65.

Here, as described above, the apron support portion 93 of the second bracing rein 92 extends in the up-down direction directly below the rear end portion of the apron frame 8 (see FIG. 5). As illustrated in FIGs. 4 to 7, between such an apron support portion 93 and the rear enlarged outer portion 32b (a vehicle width outer portion) of the front frame rear portion 32 as the above-described rear enlargement portion, a coupling margin portion 18 is integrally formed to couple these in the vehicle width direction.

### (Cast Body 100)

As illustrated in FIGs. 1 to 4, the above-described cast body 100 includes the front frame rear portion 32, a portion of the apron frame 8 other than the upper surface plate member 82, the second bracing rein 92, the suspension housing 65, and the coupling margin portion 18.

Furthermore, as illustrated in FIG.4, the cast body 100 includes a left-right connection portion 28 that couples upper portions of the rear enlarged inner portions 32c (vehicle width inner portions), which are respectively coupled to left and right tunnel opening side portions 2Aa of the tunnel opening 2A of the dash panel 2, in the left and right front frame rear portions 32 along a tunnel opening upper side portion 2Ab of the tunnel opening 2A of the dash panel 2. The left-right connection portion 28 is integrally formed with vehicle width inner portions of the left and right front frame rear portions 32. The cast body 100 is also referred to as gigacast and is made of an aluminum alloy that is integrally cast as a relatively large single component including the above-described elements (modules) provided in a front portion of the body.

### (Dash Rein 9)

As illustrated in FIGs. 7 to 9, the dash rein 9 is joined to a surface of the dash panel 2 on the inner side of the cabin CR, and forms a closed cross section 9S with the surface thereof on the inner side of the cabin CR (see FIG. 8).

The closed cross section 9S is configured to continuously extend downward to the outer side in the vehicle width direction from the rear end portion of the front frame 3 to the hinge pillar 7 and the inner side sill 41 directly below it in a manner to overlap a rear end of the rear enlarged outer portion 32b (a vehicle outer side portion) of the front frame rear portion 32 as the box-shaped hollow body in a vehicle rear view and to overlap the inner side sill 41 in a vehicle plan view (see FIGs. 7 and 8).

As illustrated in FIG. 7, an outer edge flange portion 912a of the dash rein 9 in the vehicle width direction is joined to the inner hinge pillar 71 and the inner side sill 41 directly below it via the vehicle width outer edge flange portion 23 of the dash panel 2. In this way, the closed cross section 9S of the dash rein 9 is coupled to the side sill closed cross sections 421S, 422S and the hinge pillar closed cross section 7S on top thereof in the vehicle width direction.

As illustrated in FIGs. 1 to 3 and 9, the body structure for the vehicle in the present embodiment includes: the dash panel 2 that separates the cabin CR and the power unit room PR (the front space) of the cabin CR in the front-rear direction; the pair of the left and right front frames 3 that extends in the front-rear direction on both the left and right side of the power unit room PR, respectively; the pair of the left and right hinge pillars 7 that extends in the up-down direction at both of the ends of the dash panel 2 in the vehicle width direction; the pair of the left and right side sills 4, to which the lower ends of the hinge pillars 7 are respectively fixed, and which extends in the front-rear direction; and the floor panel 1 that extends rearward in the vehicle from the lower end portion of the dash panel 2 and forms the floor surface of the cabin CR. The tunnel portion 10 that bulges upward is formed in the central portion of the floor panel 1 in the vehicle width direction, the pair of the left and right tunnel side frames 12, which extends in the front-rear direction, is respectively disposed in the lower end portions of the side surface portions 10a on both the left and right sides of the tunnel portion 10, and the hinge pillars 7 each include the outer hinge pillar 72 that is provided with the hinge attachment portions 15 (15a, 15b) (see FIG. 2) to attach the door hinges 16.

As illustrated in FIGs. 5 and 8, the outer hinge pillar 72 is formed with the inward deformed portion 73 in an inward displaced shape, which is displaced inward in the vehicle width direction, in the portion below the lower hinge attachment portion 15b on the lower side of the hinge attachment portions 15a, 15b. As illustrated in FIG. 8, the side sill 4 is arranged at such a position that at least a part thereof overlaps the lower end portion (72a) of the outer hinge pillar 72 in the vehicle width direction. As illustrated in FIGs. 3 and 4, the front frame rear portion 32, which is provided in the rear portion of the front frame 3, is formed as the rear enlargement portion that is gradually enlarged toward the rear end portion 32r. The front frame rear portion 32 is formed as a part of the cast body 100, the rear end portion of which is joined to the dash panel 2. The rear end portion of the cast body 100 is configured to overlap the front end portion of the side sill 4 and the front end portion 122 of the tunnel side frame 12 in the vehicle front view (see FIG. 4).

As described above, the outer hinge pillar 72 is formed with the inward deformed portion 73 in the portion below the lower hinge attachment portion 15b, and the side sill 4 is arranged at such a position that at least a part thereof overlaps the lower end portion (72a) of such an outer hinge pillar 72 in the vehicle width direction. Thus, the side sill 4 can be disposed close to the inner side in the vehicle width direction, together with the lower end portion (72a) of the outer hinge pillar 72 (see FIGs. 4 and 8). As a result, it is possible to reduce an offset amount (a displacement amount) of the side sill 4 in the vehicle width direction with respect to the front frame 3.

Furthermore, the rear end portion of the cast body 100, which includes the front frame rear portion 32 as the rear enlargement portion, overlaps the front end portion of the side sill 4 and the front end portion 122 of the tunnel side frame 12 in the vehicle front view. In this way, it is possible to mitigate an influence of the offset of each of the front end portions of the side sill 4 and the tunnel side frame 12 with respect to the rear end portion of the front frame 3 in the vehicle front view.

Thus, the frontal collision load that is transmitted rearward in the vehicle from the front frame 3 during a frontal collision can smoothly flow to the side sill 4 and the tunnel side frame 12. That is, the frontal collision load during a frontal collision of the vehicle is made to flow as linearly as possible from the front frame 3 to the rear by suppressing a bending angle thereof in the vehicle width direction. In this way, it is possible to improve efficiency of the load transmission.

Furthermore, a floor frame that extends along the floor panel 1 in the front-rear direction at a position directly below a driver is eliminated, and the tunnel side frame 12 is provided. In this way, it is possible to lower the floor. As a result, it is possible to satisfy a need of the driver who wishes to lower his/her hip point, and such a need is particularly requested in the vehicle, such as a sports car, that emphasizes driving performance.

As illustrated in FIG. 8, as an aspect of the invention, the side sill 4 has the closed cross sections 421S, 422S, each of which extends in the front-rear direction, between the inner side sill 41 and the outer side sill 42 (the upper outer side sill 421 and the lower outer side sill 422). As illustrated in FIG. 4, the front end portion of the side sill 4 includes the lid member 50 as the closing member that closes the upper opening 421A and the lower opening 422A as the front openings of the closed cross sections 421S, 422S. The apron support portion 93 as the outer portion in the rear end portion of the cast body 100 is joined to the inner side sill 41 via the lid member 50.

With this configuration, during a frontal collision, the frontal collision load is transmitted from the front frame rear portion 32, which forms the cast body 100, to the apron support portion 93 as the outer portion, and is further transmitted outward in the vehicle width direction to the rear via the lid member 50. In this way, it is possible to efficiently transmit and disperse the frontal collision load to the side sill 4 that is offset from the front frame 3 in the vehicle width direction.

Furthermore, the lid member 50 is provided over the inner side sill 41 and the outer side sill 42 in the manner to close the front openings 421A, 422A of the closed cross sections 421S, 422S in the front end portion of the side sill 4. In this way, it is also possible to transmit and disperse the frontal collision load to the outer side sill 42 via the lid member 50.

As illustrated in FIGs. 4 to 7, as an aspect of the invention, the apron frame 8 and the apron support portion 93, which extends downward from the rear end portion of the apron frame 8 to the height of the side sill 4 and supports the apron frame 8, are provided on the outer side (and above) of the front frame 3 in the vehicle width direction, and the apron support portion 93 is formed as the outer portion of the rear end portion of the cast body 100.

With this configuration, the apron support portion 93 can also take a role as a part of the load transmission from the front frame 3 to the side sill 4.

As illustrated in FIGs. 4, 5, and 7, as an aspect of the invention, the front frame rear portion 32 and the apron support portion 93 are integrally formed over the vehicle width direction while being coupled in the width direction via the coupling margin portion 18 that serves as a part of the cast body 100.

With this configuration, even in the configuration that the side sill 4 is offset from the front frame rear portion 32 to the vehicle width outer side, the coupling margin portion 18 and the apron support portion 93 allow the rear end portion of the cast body 100 to have the width that is wider to the outer side in the vehicle width direction than the rear enlarged outer portion 32b as the vehicle width outer portion of the front frame rear portion 32 and to overlap the side sill 4 in the vehicle front view. Thus, it is possible to improve the transmission efficiency of the frontal collision load from the front frame 3 to the side sill 4.

As illustrated in FIGs. 1 and 4 to 7, as an aspect of the invention, the side sill 4 is provided below the front frame 3, and the apron support portion 93 as the outer portion of the rear end portion of the cast body 100 is provided with the rib 95 that continuously extends from the position above the height of the side sill 4 to the height of the side sill 4.

With this configuration, it is possible to improve the load transmission efficiency in the up-down direction from the front frame 3 to the side sill 4, which is located below the front frame 3.

As illustrated in FIGs. 4, 5, and 7, as an aspect of the invention, the front frame rear portion 32 includes the rear enlarged lower portion 32d that is enlarged downward to the height of the side sill 4, which is provided below the front frame 3, toward the rear end.

With this configuration, it is possible to improve the transmission efficiency of the frontal collision load in the up-down direction from the front frame 3 to the side sill 4, which is located below the front frame 3.

As illustrated in the drawings, as an aspect of the invention, the front frame rear portion 32 is configured such that the inner end of the rear enlarged lower portion 32d in the vehicle width direction overlaps the front end portion 122 of the tunnel side frame 12 in the vehicle front view.

With this configuration, it is possible to improve the transmission efficiency of the frontal collision load from the front frame front portion 31 to the front end portion 122 of the tunnel side frame 12 by the front frame rear portion 32.

In correspondence between the configuration in the invention and the above-described embodiment, the front space in the invention corresponds to the power unit room PR. Hereinafter, similarly, the side wall corresponds to the side surface portion 10a, the closed cross-sectional space corresponds to the upper side sill closed cross section 421S and the lower side sill closed cross section 422S, the front opening of the closed cross-sectional space corresponds to the upper opening 421A and the lower opening 422A, the closing member corresponds to the lid member 50, and the outer portion of the rear end portion of the cast body corresponds to the apron support portion 93. However, the invention is not limited to the configuration in the above-described embodiment, and many embodiments can be obtained.

### [Reference Signs List]

1: floor panel
2: dash panel
3: front frame
4: side sill
7: hinge pillar
8: apron frame
10: tunnel portion
10a: side surface portion
12: tunnel side frame
15: hinge attachment portion
15b: lower hinge attachment portion
16: door hinge
18: coupling margin portion
32: front frame rear portion
32r: rear end portion of front frame (front frame rear portion)
41: inner side sill
42: outer side sill
50: lid member
72: outer hinge pillar
73: inward deformed portion
93: apron support portion
95: rib
100: cast body
122: front end portion
421A: upper opening
421S: upper side sill closed cross section
422A: lower opening
422S: lower side sill closed cross section
CR: cabin
PR: power unit room

## Claims

1. A body structure for a vehicle comprising:
a dash panel (2) that separates a cabin (CR) and a front space of the cabin (CR) in a vehicle front-rear direction;
a pair of left and right front frames (3) that extends in the vehicle front-rear direction on both left and right sides of the front space, respectively;
a pair of left and right hinge pillars (7) that extends in an up-down direction in both end portions of the dash panel (2) in a vehicle width direction, respectively;
a pair of left and right side sills (4), to which lower ends of the hinge pillars (7) are respectively fixed, and which extends in the vehicle front-rear direction; and
a floor panel (1) that extends rearward in a vehicle from a lower end portion of the dash panel (2) to form a floor surface of the cabin (CR),
a tunnel portion (10) that bulges upward being formed in a central portion of the floor panel (1) in the vehicle width direction,
a pair of left and right tunnel side frames (12) that extends in the vehicle front-rear direction being disposed in side wall lower end portions on both sides of the tunnel portion (10) in the vehicle width direction, and
each of the hinge pillars (7) including an outer hinge pillar (72) in which a hinge attachment portion (15) for attaching a door hinge (16) is provided on each of upper and lower sides, wherein
the outer hinge pillar (72) is formed in an inward displaced shape in which a portion thereof below a lower hinge attachment portion (15) as lower one of the hinge attachment portions (15) is displaced inward in the vehicle width direction,
each of the side sills (4) is arranged at such a position that at least a part thereof overlaps a lower end portion of the outer hinge pillar (72) in the vehicle width direction,
a rear portion of each of the front frames (3) is formed as a rear enlargement portion that is gradually enlarged toward a rear end portion,
at least the rear portion of each of the front frames (3) is formed by a cast body (100), a rear end portion of which is joined to the dash panel (2), and
the rear end portion of the cast body (100) is configured to overlap a front end portion (122) of each of the side sills (4) and a front end portion (122) of each of the tunnel side frames (12) in a vehicle front view.

2. The body structure for a vehicle according to claim 1, wherein
each of the side sills (4) has a closed cross-sectional space that extends in the vehicle front-rear direction between an inner side sill (41) and an outer side sill (42),
the front end portion (122) of each of the side sills (4) includes a closing member that closes a front opening of the closed cross-sectional space, and
an outer portion of the rear end portion of the cast body (100) is joined to the inner side sill (41) via the closing member.

3. The body structure for a vehicle according to claim 1 or 2, wherein
an apron frame (8) and an apron support portion (93) are provided on an outer side of each of the front frames (3) in the vehicle width direction, the apron support portion (93) extending downward from a rear end portion of the apron frame (8) to a height of the respective side sill (4), and
the apron support portion (93) is formed as the outer portion of the rear end portion of the cast body (100).

4. The body structure for a vehicle according to any one of the preceding claims, wherein
the rear portion of each of the front frames (3) and the respective apron support portion (93) are coupled in a width direction via a coupling margin portion (18) that constitutes a part of the cast body (100), and are integrally formed in the vehicle width direction.

5. The body structure for a vehicle according to any one of the preceding claims, wherein
each of the side sills (4) is provided below the respective front frame (3), and
the outer portion of the rear end portion of the cast body (100) is provided with a rib (95) that continuously extends from a position above the height of each of the side sills (4) to the height of the respective side sill (4).

6. The body structure for a vehicle according to any one of the preceding claims, wherein
the rear portion of each of the front frames (3) is configured to enlarge downward to a height of the respective side sill (4), which is provided below the respective front frame, toward the rear end portion.

7. The body structure for a vehicle according to any one of the preceding claims, wherein
in the rear portion of each of the front frames (3), an inner end in the vehicle width direction overlaps the front end portion (122) of the respective tunnel side frame (12) in the vehicle front view.

8. The body structure for a vehicle according to any one of the preceding claims, wherein a floor frame that extends along a floor panel in a front-rear direction at a position directly below a driver is eliminated, and the tunnel side frames (12) are provided.

9. The body structure for a vehicle according to any one of the preceding claims, wherein a portion on the outer side of the front frame rear portion (32) as the rear enlargement portion in the vehicle width direction overlaps the front end portion of each of the side sills (4) in the vehicle front view.

10. The body structure for a vehicle according to any one of the preceding claims, wherein the rear portion of each of the front frames (32r) and the respective apron support portion (93) may be coupled in a width direction via a coupling margin portion (18) that constitutes a part of the cast body (100), and may be integrally formed in the vehicle width direction.

11. The body structure for a vehicle according to any one of the preceding claims, wherein in the configuration that the side sill (4) is offset to the vehicle width outer side from the rear portion (32) of the front frame, the rear end portion of the cast body (100) is widened to the outer side in the vehicle width direction from the rear portion of the front frame (32r) and can thereby overlap the side sill (4) by the coupling margin portion (18) and the apron support portion (93) in the vehicle front view.

12. The body structure for a vehicle according to any one of the preceding claims, wherein a closing member is provided over the inner side sill and the outer side sill (42) in the vehicle front view in a manner to close the front opening of the closed cross-sectional space in the front end portion of each of the side sills (4).

13. The body structure for a vehicle according to any one of the precding claims, wherein each of the side sills (4) may have a closed cross-sectional space.

14. The body structure for a vehicle according to claim 13, wherein the closed cross-sectional space extends in the vehicle front-rear direction between an inner side sill (41) and an outer side sill (42).

15. A vehicle comprising a body structure according to any one of the preceding claims 1 to 14.
